# EUROPÄISCHE PATENTSCHRIFT

(11) **EP 1 654 928 B1**
(45) Veröffentlichungstag und Bekanntmachung des Hinweises auf die Patenterteilung: **15.08.2007**
(21) Anmeldenummer: 05077322.5
(22) Anmeldetag: 12.10.2005
(51) Int. Cl.: A01K 31/22, A01K 31/12

(54) **Verfahren und Vorrichtung zur Aufzucht von Geflügel**
Breeding process and system for poultry
Procédé et dispositif pour l'élevage de volaille

(30) Priorität: 12.10.2004 NL 1027223
(43) Veröffentlichungstag der Anmeldung: 10.05.2006
(73) Patentinhaber: Kühlmann, Josef, 48366 Laer (DE)
(72) Erfinder: Van Dam, Alphonsus Franciscus Maria, 8051 SM Hattem (NL)
(74) Vertreter: Habbel, Hans-Georg

(56) Entgegenhaltungen:
- US-A- 1 658 515
- US-A- 2 275 009
- US-A- 4 315 481
- US-A- 4 781 148

## Beschreibung

Die vorliegende Erfindung betrifft eine Vorrichtung zur Aufzucht von Geflügel.

Eine Vorrichtung zur Aufzucht von Geflügel ist an sich bekannt und eignet sich für die Anwendung bei der Aufzucht von Geflügel zu Legehennen oder Zuchthennen oder ähnlichem Geflügel. Solches Geflügel wird beispielsweise von Eintagsküken beispielsweise zu einer Legehenne, einer Zuchthenne oder einem Hahn aufgezogen. Die Küken stammen aus Eiern, die beispielsweise in einer Brutmaschine ausgebrütet wurden. Solche Küken werden zur vorliegenden Aufzuchtvorrichtung transferiert und bleiben dort einige Wochen, beispielsweise etwa 15 bis 20 Wochen. Das Geflügel eignet sich danach zum Weiterverkauf.

In der jüngsten Vergangenheit fand ein Umschwung von der intensiven Geflügelhaltung, mit beispielsweise Batterien für Hühner, zu einer tierfreundlicheren Vorrichtung wie einem. Bodenhaltungsstall oder einem Volierestall statt, wobei das Geflügel Platz hat, um sich durch den Stall zu bewegen. Der gewünschte Bewegungsraum in den besagten Legeställen bringt jedoch höhere Anforderungen für die verwendete Aufzuchtvorrichtung mit sich. In einem Volierestall ist beispielsweise eine große Anzahl von in unterschiedlichen Höhen angeordneten Sitzstangen für das Geflügel erforderlich.

Dokument US-A-1658515 offenbart eine solche Aufzuchtvorrichtung.

Ein Nachteil der Anwendung eines solchen Bodenhaltungsstalls oder Volierestalls ist, dass das Geflügel vorbereitet sein müss, um auf den besagten Sitzstangen Platz nehmen zu können, das heisst es muss zu einer nächsten Sitzstange, die sich in einer Höhe über einem Untergrund oder über einer anderen Sitzstange befinden kann, hüpfen können und sich auch trauen. Aus der Praxis ist bekannt, dass das Geflügel auch nicht ohne weiteres lernen kann oder will, von einer Sitzstange zu einer nächsten Sitzstange in einer größeren Höhe zu hüpfen.

Ein weiterer Nachteil eines solchen Bodenhaltungsstalls oder Volierestalls ist, dass dieser durch den erforderlichen Bewegungsraum und die große Anzahl von Sitzstangen und weiteren in einer Aufzuchtvorrichtung üblicherweise anwesenden Elementen nicht ohne weiteres in einem willkürlichen Raum, wie einem Stall oder einem anderen Gebäude, realisiert werden kann, weil beispielsweise die Konstruktion des Stalls die Anordnung der erforderlichen Elemente nicht gestattet. Ein zusätzliches Problem ist, dass viele der heute verfügbaren Ställe eine relativ einfache Konstruktion mit einer relativ schwachen Dachkonstruktion aufweisen, die ungeeignet ist, um daran Sitzstangen zu befestigen. Dies gilt vor allem in den größeren Ställen, in denen sich mehr als 25.000 Hühner befinden können.

Die vorliegende Erfindung hat die Aufgabe, das oben genannte Problem zu lösen, und stellt zu diesem Zweck eine Vorrichtung zur Aufzucht von Geflügel bereit, in der sich Elemente, wie Sitzstangen, in verschiedenen Höhen befinden können, wobei das Geflügel lernen kann, von einer Sitzstange zu einer nächsten Sitzstange in einer größeren Höhe zu hüpfen, und wobei die Vorrichtung in einem Raum, wie jenem eines Stalls oder eines anderen dazu geeigneten Gebäudes, realisiert werden kann.

Die Erfindung umfasst eine Vorrichtung zur Aufzucht von Geflügel, wobei die Vorrichtung mindestens ein Portal umfasst, das aus sich im Wesentlichen senkrecht erstreckenden Ständern gebildet ist, mit denen sich im Wesentlichen waagerecht erstreckende Träger verbunden sind. Das Portal spannt damit einen Raum auf, der sich beispielsweise im Innenraum eines Stalls oder eines anderen dazu geeigneten Gebäudes befindet. Ferner kann es sein, dass ein Raum, der vom Portal aufgespannt wird, mindestens teilweise von einer Wand begrenzt ist, insbesondere einer Seitenwand, und ganz besonders einer Seitenwand, die aus Drahtgeflecht gebildet ist.

Das Portal kann dabei auf einem Untergrund angeordnet sein, der Teil der Vorrichtung gemäß der vorliegenden Erfindung ist oder auch nicht.

Das Portal kann selbsttragend und ferner mit einem Stellmittel zum Stellen des Portals in Bezug auf den besagten Untergrund versehen sein.

Weiterhin kann das Portal ein Hubmittel, wie eine Winde, eine Haspel, eine Rolle, einen Flaschenzug oder ein anderes geeignetes Hubmittel, umfassen.

Im Falle einer Winde kann diese Winde aus einer Windenstange bestehen, die in den Ständern oder Trägern des besagten Portals gelagert und mit einem Windendraht, Windenseil, Windenkabel oder einer Windenkette versehen ist. Im Allgemeinen kann das Hubmittel mit der Hand betrieben werden oder mit einem Motor ausgestattet sein, wie etwa einem elektrischen Motor, der von einem Steuerungssystem gesteuert wird, das beispielsweise programmierbar ist.

Im Falle eines programmierbaren Steuerungssystems kann dieses das Hubmittel eine vorher festgelegte Tätigkeit ausführen lassen.

Das Hubmittel kann dabei verwendet werden, um Hängeelemente, wie eine Futtervorrichtung, ein Wasserzufuhrmittel, eine Sitzstange oder ein Gitter auf einer variablen Höhe anzuordnen. Die Futtervorrichtung kann dabei eine Futterrinne sein, beispielsweise eine Futterrinne, die mit einem automatischen. Füllsystem gekoppelt ist, und das Wasserzufuhrmittel kann beispielsweise eine Nippelstange sein. Das Hängeelement kann auch eine Sitzstange sein, beispielsweise eine Sitzstange, die in einer bestimmten Höhe über einer anderen Sitzstange oder über einem Untergrund angeordnet ist.

Ferner kann das Hängeelement ein Gitter sein, wie einPodestgitter, wobei das Gitter scharnierend mit dem Hubmittel verbunden ist und eine im Wesentlichen flache Form aufweist und zwischen einer im Wesentlichen waagerechten Ausrichtung, in der es sich in einer im Wesentlichen waagerechten Ebene erstreckt, und einer im Wesentlichen senkrechten Ausrichtung, in der es sich in einer im Wesentlichen senkrechten Ebene erstreckt, gekippt werden kann.

In der im Wesentlichen senkrechten Ausrichtung kann das Gitter so aufgestellt werden, dass es als Trennmittel zum Einschränken eines Lebensbereichs für mindestens einen Teil des Geflügels dient, beispielsweise eines getrennten Lebensbereichs für Küken, während es in der im Wesentlichen liegenden Ausrichtung so aufgestellt werden kann, dass es als Teil des Lebensbereiches für das Geflügel dient.

Es ist auch möglich, dass die Vorrichtung sich mindestens teilweise über ein Bodengitter erstreckt, das scharnierend angeordnet sein kann, oder sich über einem Mistauffangmittel wie einem Auffangbehälter oder einem Förderband befindet.

Die vorstehend beschriebene Vorrichtung kann weiterhin Teil einer Kaskade von modular erweiterbaren Aufzuchtvorrichtungen sein.

Oben genannte und weitere Vorteile und Merkmale der vorliegenden Erfindung werden anhand der beigefügten Zeichnung erläutert. Es zeigen:
Figur 1 eine Vorderansicht einer ersten Ausführungsform einer Aufzuchtvorrichtung gemäß der vorliegenden Erfindung;
Figur 2 eine zweite Ausführungsform in Vorderansicht einer Aufzuchtvorrichtung gemäß der vorliegenden Erfindung;
Figur 3 eine Vorderansicht im Querschnitt einer dritten Ausführungsform einer Aufzuchtvorrichtung gemäß der vorliegenden Erfindung; und
Figur 4 ein Detail der Aufzuchtvorrichtung aus Figur 3.

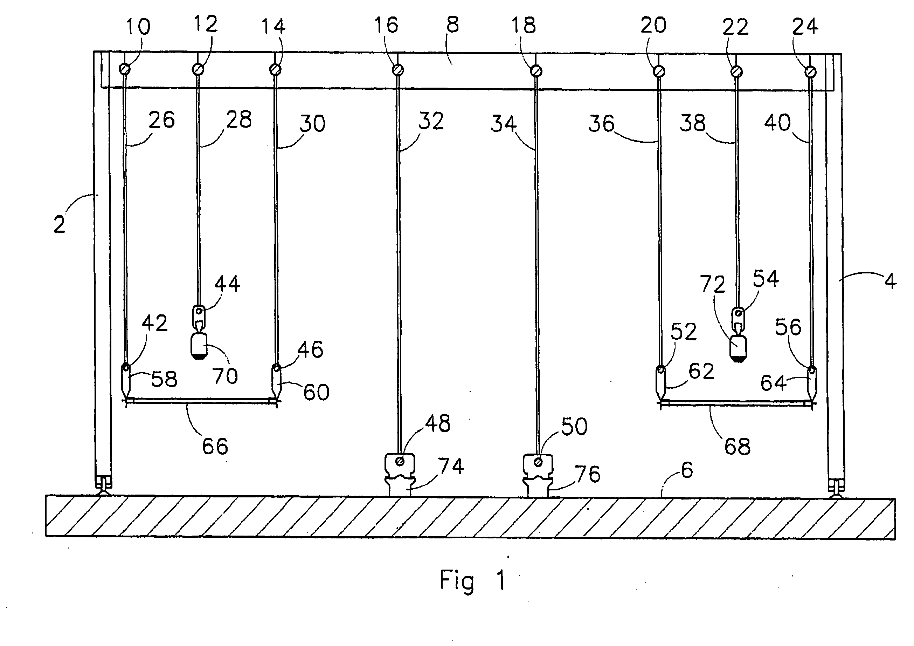

Figur 1 zeigt eine Vorderansicht einer ersten bevorzugten Ausführungsform einer Aufzuchtvorrichtung 1 gemäß der vorliegenden Erfindung. Die Vorrichtung 1 umfasst Ständer 2, 4, die auf einem Untergrund 6 angeordnet und an einer Oberseite mit Querträgern 8 verbunden sind. Die Vorrichtung kann sowohl in der Breitenrichtung, in der Richtung der Träger 8, als auch in der Längsrichtung, quer zu den Trägern 8, weiter sein als dargestellt, das heißt, dass die Vorrichtung modular und erweiterbar ist. Die dargestellte Form in Figur 1, oder ein Teil davon, ist dann nur ein Basiselement. Die Ständer 2 und 4 und die Träger 8 bilden dabei ein so genanntes Portal, an dem weitere Elemente der Aufzuchtvorrichtung 1 aufgehängt werden können.

Winderohre 10, 12, 14, 16, 18, 20, 22 und 24, welche sich in die Richtung quer zur Ebene der Zeichnung in Längsrichtung erstrecken, sind drehbar in den Trägern 8 angeordnet. An den Winderohren sind Drähte 26, 28, 30, 32, 34, 36, 38 und 40 befestigt, die an deren anderem Ende mit Sitzstangen 42, 44, 46, 48, 50, 52, 54 und 56 verbunden sind. Die Sitzstangen erstrecken sich in Längsrichtung in die Richtung quer zu den Trägern 8, im Wesentlichen parallel zu den Winderohren 10, 12, 14, 16, 18, 20, 22 und 24. Die Sitzstangen 42, 46, 52, 56 sind auch mit Zwischenteilen 58-64 verbunden, die an deren Unterseiten mit sich in Längsrichtung parallel zu den Sitzstangen erstreckenden Gittern 66, 68 scharnierend gekoppelt sind. Solche Gitter werden bei der Aufzucht von Hühnern auch als Podeste bezeichnet. Die Sitzstangen 44 und 54 sind mit einem Wasserzufuhrmittel in Form von so genannten Nippelleitungen verbunden. Eine solche Nippelleitung ist eine sich entlang oder durch die Sitzstange erstreckende Flüssigkeitsleitung, die mit Nippeln versehen ist. Ein solcher Nippel kann beispielsweise durch Berührung mit einem Schnabel aktiviert werden und ist an seiner Unterseite mit einem Flüssigkeitsauffangelement aus Kunststoff 70, 72 versehen. Die Sitzstangen 48 und 50 sind an der Unterseite mit Futtervorrichtungen in Form von Futterleitungen 74, 76 versehen. Es ist auch möglich, dass die Sitzstangen 48 und 50 über solchen Futterleitungen frei aufgehängt sind. Eine Futterleitung ist gewöhnlich eine sich in Längsrichtung entlang der Sitzstange 48, 50 erstreckende Fördervorrichtung, durch welche Futter mittels eines geeigneten Fördermittels, beispielsweise einer Kette oder Futterspirale; transportiert werden kann.

Die Funktion der Aufzuchtvorrichtung 1 gründet auf dem allmählichen Anpassen der Höhe der Sitzstangen in Bezug auf den Untergrund 6. Am Anfang werden Eintagsküken auf den Untergrund 6 gesetzt, wobei die Gitter oder Podeste 66, 68 senkrecht angeordnet sind, um den Bewegungsraum der Eintagsküken einzuschränken. Drähte 26 und 40 sind mit ihrem Ende völlig bis auf den Untergrund hinabgelassen, wobei die Drähte 30 und 36 so hinabgelassen sind, dass die Gitter in senkrechte Lage gedreht werden können. Wenn die Küken einmal ein Alter erreicht haben, in dem sie zu Sitzstangen hüpfen können, oftmals ist das im Alter von 2 bis 4 Wochen der Fall, werden die Gitter in die in Figur 1 dargestellte waagerechte Lage gedreht. Die Höhe der Gitter 66, 68 in Bezug auf den Untergrund ist zunächst beispielsweise etwa 5 cm. Die Winderohre 10, 12, 14, 16, 18, 20, 22 und 24 sind mit einem weiter nicht dargestellten Steuerungssystem gekoppelt, das einen Prozessor, einen Speicher und eine Programmierung umfasst, wobei das System dafür sorgt, dass sich die Winderohre zu festgesetzten Zeiten drehen, um die Drähte 26, 28, 30, 32, 34, 36, 38 und 40 um einen bestimmten Abstand zu verkürzen und so den Abstand der Sitzstangen in Bezug auf den Untergrund zu vergrößern. Dadurch, dass diese Handlung zu festgesetzten Zeiten durchgeführt wird, wobei beispielsweise jede Woche der Abstand um 5 cm vergrößert wird, werden die Küken langsam lernen, zu immer größeren Höhen zu hüpfen. Das Hüpfen wird weiterhin dadurch gefördert, dass sich die Wasservorrichtungen 70, 72 über den Gittern 66, 68 befinden, so dass die Küken gezwungen sind zu hüpfen, um ihr Trinkwasser zu erreichen. Wie gesagt, wird das Geflügel von Eintagsküken zu ausgewachsenen Lege- oder Zuchthennen gezüchtet. Solche Hühner sind in einem Alter von etwa 17 Wochen ausgewachsen. Nach 17 Wochen wird der Abstand der Sitzstangen hinsichtlich des Untergrundes daher einen maximalen Abstand erreicht haben. Ein solcher maximaler Abstand liegt beispielsweise bei etwa 50 bis 70 cm. In den dazwischenliegenden Wochen, das heißt von 0 bis 17 Wochen, wird der Abstand der Sitzstangen zum Untergrund immer schrittweise oder kontinuierlich vergrößert. Dies kann mit der Hand stattfinden oder automatisch durch das besagte Antriebssystem gesteuert werden. Das Vergrößern kann durch einen kontinuierlichen variablen Antrieb oder mit der Hand, in Abhängigkeit vom Fortschreiten des Wachstums des Geflügels, erfolgen.

Weiterhin können die Höhen einer Futtervorrichtung, eines Wasserzufuhrmittels, einer Sitzstange oder eines Gitters unabhängig voneinander variierbar sein. Ein Vorteil besteht darin, dass die Portale, welche Ständer und Träger umfassen, das gesamte Gewicht der Sitzstangen tragen. Somit kann die Aufzuchtvorrichtung 1 in einem beliebigen Stall angeordnet werden und eignet sich diese daher auch für bestehende Ställe mit einer relativ einfachen, schwachen Dachkonstruktion. Weiterhin ist die Vorrichtung in sowohl Längs- als auch Breitenrichtung erweiterbar und können mehrere Schichten der Vorrichtung übereinander gestellt angeordnet werden, um die Kapazität zu erhöhen. In einer praktischen Ausführungsform ist die Aufzuchtvorrichtung 1 beispielsweise in einem Stall mit einer Breite von 10 Metern und einer Länge von 50 Metern angeordnet, in dem Platz für etwa 25.000 bis 30.000 ausgewachsene Hühner ist. Die Vorrichtung ist auch für Küken ab 4 Wochen geeignet. Somit kann die Durchsatzgeschwindigkeit weiter erhöht werden, indem eine Aufzuchtvorrichtung 1 in der Nähe eines Brutsystems angebracht wird, wobei die Küken bis 4 Wochen im Brutsystem bleiben und danach zur Aufzuchtvorrichtung 1 transferiert werden. Die Lernkurve zum Hüpfen bleibt dann gleich und die schließlich ausgewachsenen Hühner werden auch in der Lage sein, sich in einem Volierestall zu behaupten.

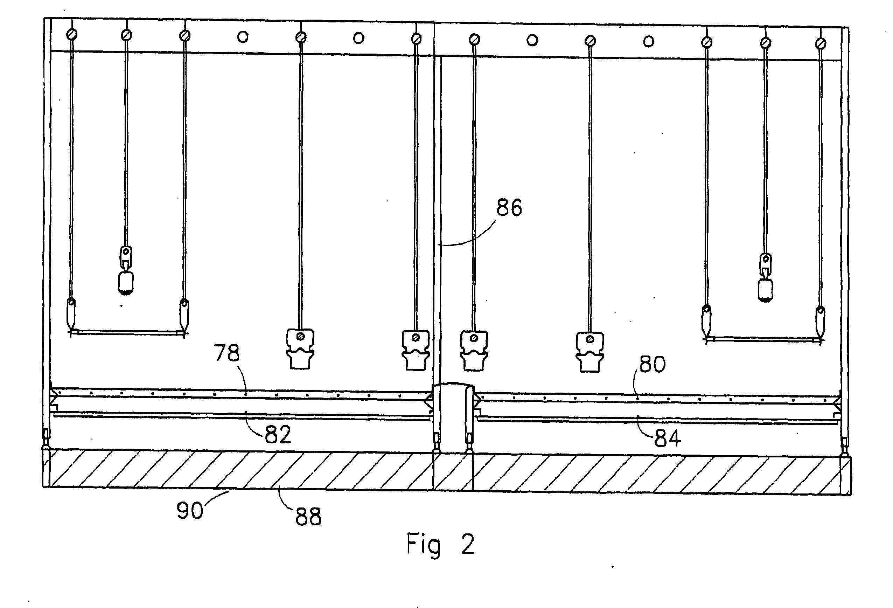

Figur 2 zeigt eine zweite Ausführungsform in Vorderansicht einer Aufzuchtvorrichtung 90 gemäß der vorliegenden Erfindung. Die Vorrichtung erstreckt sich über Bodengitter 78 und 80, unter denen Mistauffangmittel in Form von Förderbändern 82 und 84 über dem Untergrund 88 angebracht sind. Ferner ist eine Zwischenwand 86 dargestellt.

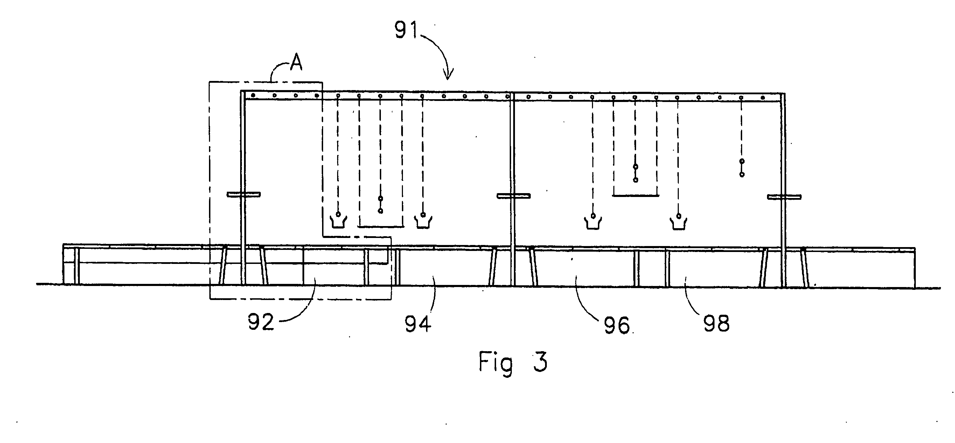

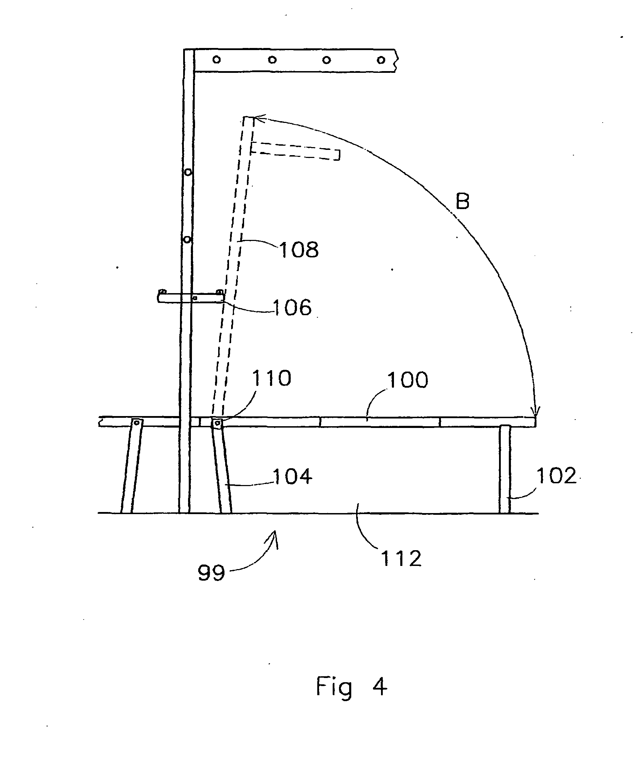

Figur 3 zeigt eine Vorderansicht im Querschnitt einer dritten Ausführungsform einer Aufzuchtvorrichtung 91 gemäß der vorliegenden Erfindung. In Figur 3 sind Mistauffangbehälter 92, 94, 96 und 98 dargestellt und wird ferner ein Rahmen A gezeigt, der einen Teil der Vorrichtung bezeichnet, der in Figur 4 näher erläutert wird.

Figur 4 zeigt ein Detail 99 der Aufzuchtvorrichtung aus Figur 3, das dort innerhalb des Rahmens A angegeben ist. Im Detail ist ein um den Drehpunkt 110 kippbares Bodengitter 100 mit Stützen 102 und 104 zu sehen, welches um einen Winkel B geschwenkt werden kann, bis es an die Begrenzung 106 stößt und sich in der mit einer unterbrochenen Linie gezeichneten Position 108 befindet. Dadurch wird der Mistauffangbehälter 112 beispielsweise für Reinigungsarbeiten zugänglich gemacht.

Die vorliegende Erfindung beschränkt sich nicht auf die oben beschriebenen Ausführungsformen, bei denen zahlreiche Änderungen und Modifikationen denkbar sind. Der Schutzumfang wird vom Bereich der hier beigefügten Ansprüche bestimmt.

## Patentansprüche

1. Verfahren zur Aufzucht von Geflügel mit im Innenraum eines Stalles oder eines anderen dazu geeigneten Gebäudes angeordneten Hubmitteln (20 - 24), die als Futtervorrichtungen und/oder Wassertränken und/oder Sitzstangen und/oder Gitter ausgebildete Hängeelemente tragen, wobei diese Hubmittel (10 - 24) den Abstand der Hängeelemente zum Untergrund schrittweise oder kontinuierlich in Abhängigkeit des Wachstums der Tiere vergrößern.

2. Vorrichtung zur Durchführung des Verfahrens nach Anspruch 1 zur Aufzucht von Geflügel mit ein Portal aufspannenden Vertikalständern (2, 3) und mindestens einen mit den Ständern (2, 3) verbundenen, sich im wesentlichen waagerecht erstreckenden Querträger (8), **dadurch gekennzeichnet, daß** der Querträger (8) Hubmittel (10, 24) aufweist, mit denen Futtervorrichtungen (74, 76) und/oder Wasser-tränken (70, 72) und/oder Sitzstangen (42 - 56) und/oder Gitter (66 - 68) als Hängeelemente höheneinstellbar verbunden sind.

3. Vorrichtung nach Anspruch 2, **dadurch gekennzeichnet, daß** das durch die Ständer (2, 4) und den Querträger (8) gebildete Portal selbsttragend ausgebildet ist.

4. Vorrichtung nach Anspruch 2 oder 3, **dadurch gekennzeichnet, daß** der von dem Portal aufgespannte Raum mindestens zum Teil von einer Wand (86), insbesondere einer Seitenwand, begrenzt wird.

5. Vorrichtung nach Anspruch 4, **dadurch gekennzeichnet, daß** die Wand im wesentlichen aus Drahtgeflecht gebildet ist.

6. Vorrichtung nach Anspruch 2, **dadurch gekennzeichnet, daß** die Hubmittel 10...24)als Winden ausgebildet sind.

7. Vorrichtung nach Anspruch 6, **dadurch gekennzeichnet, daß** die jeweilige Winde einen Windendraht (26 ...40), ein Windenseil, ein Windenkabel oder eine Windenkette umfaßt.

8. Vorrichtung nach Anspruch 6 oder 7, **dadurch gekennzeichnet, daß** die Windenrohre (10 ...24) in den Trägern (8) gelagert sind.

9. Vorrichtung nach einem oder mehreren der vorhergehenden Ansprüche 2 bis 8, **dadurch gekennzeichnet, daß** die Hubmittel (10 .... 24) von Hand betätigbar sind.

10. Vorrichtung nach einem oder mehreren der vorhergehenden Ansprüche 2 bis 8, **dadurch gekennzeichnet, daß** die Hubmittel (10 ...24) mit einem Motor ausgestattet sind.

11. Vorrichtung nach Anspruch 10, **dadurch gekennzeichnet, daß** der Motor von einem Steuerungssystem gesteuert wird, das programmierbar ist.

12. Vorrichtung nach Anspruch 2, **dadurch gekennzeichnet, daß** mehrere Hängeelemente unabhängig voneinander in einer variablen Höhe angeordnet werden können.

13. Vorrichtung nach Anspruch 2, **dadurch gekennzeichnet, daß** die Futtervorrichtung (74, 76) eine Futterrinne ist.

14. Vorrichtung nach Anspruch 13, **dadurch gekennzeichnet, daß** die Futterrinne (74, 76) mit einer automatisierten Fördervorrichtung gekoppelt ist.

15. Vorrichtung nach Anspruch 2, **dadurch gekennzeichnet, daß** das Gitter (66, 68) im wesentlichen eben ausgebildet ist und zwischen einer waagerechten Ausrichtung und einer im wesentlichen senkrechten Ausrichtung über eine Scharnierverbindung mit dem Hubmittel (10 ... 24) kippbar ist

16. Vorrichtung nach einem oder mehreren der vorhergehenden Ansprüche 2 bis 15, **dadurch gekennzeichnet, daß** Bodengitter (78, 80) vorgesehen sind.

17. Vorrichtung nach Anspruch 16, **dadurch gekennzeichnet, daß** die Bodengitter (78, 80) scharnierend angeordnet sind.

18. Vorrichtung nach Anspruch 16 oder 17, **dadurch gekennzeichnet, daß** sich unter dem Bodengitter (78, 80) ein Mistauffangmittel (82, 84) befindet.

19. Vorrichtung nach Anspruch 18, **dadurch gekennzeichnet, daß** das Mistauffangmittel ein Auffangbehälter (92, 94, 96, 98) ist.

20. Vorrichtung nach Anspruch 18, **dadurch gekennzeichnet, daß** das Mistauffangmittel ein Förderband ist.

21. Vorrichtung nach einem oder mehreren der vorhergehenden Ansprüche 2 bis 20, **dadurch gekennzeichnet, daß** die Vorrichtung mittels anderer Aufzuchteinrichtungen gemäß einem oder mehreren der vorhergehenden Ansprüche modular erweiterbar ist.

## Claims

1. Method of rearing poultry with lifting means (20 - 24) arranged in the interior space of a coop or other suitable structure, which lifting means bear suspended elements designed as feeding devices and/or waterers and/or perches and/or grills, where these lifting means (10 - 24) increase the distance between the suspended elements and the ground in stages or continuously as the animals grow.

2. Device for carrying out the method set out in claim 1 for rearing poultry with vertical supports (2. 3) clamping a portal and at least one cross member (8) connected to the supports (2, 3) and essentially extending horizontally, **characterised in that** the cross member (8) incorporates lifting means (10, 24) to which feeding devices (74, 76) and/or waterers (70, 72) and/or perches (42 - 56) and/or grills (66 - 68) are height-adjustably connected as suspended elements.

3. Device in accordance with claim 2, **characterised in that** the portal formed by the supports (2, 4) and the cross member (8) is constructed to be self-supporting.

4. Device in accordance with claim 2 or 3, **characterised in that** the room clamped on in front of the portal is at least partly limited by a wall (86), particularly a sidewall.

5. Device in accordance with claim 4, **characterised in that** the wall is formed essentially from wire mesh.

6. Device in accordance with claim 2, **characterised in that that** the lifting means (10...24) are constructed as winches.

7. Device in accordance with claim 6, **characterised in that** the respective winch comprises a winch wire (26 ... 40), a winch rope, a winch cable or a winch chain.

8. Device in accordance with claim 6 or 7, **characterised in that** the winch cylinders (10 ... 24) are mounted in the cross members (8).

9. Device in accordance with one or more of the foregoing claims 2 to 8, **characterised in that** the lifting means (10 ... 24) can be operated by hand.

10. Device in accordance with claim one or more of the foregoing claims 2 to 8, **characterised in that** the lifting means (10 ... 24) are fitted with a motor.

11. Device in accordance with claim 10, **characterised in that** the motor is controlled by a control system which can be programmed.

12. Device in accordance with claim 2, **characterised in that** a number of suspended elements may be disposed independently of one another at a variable height.

13. Device in accordance with claim 2, **characterised in that** the feeding device (74, 76) is a feeding trough.

14. Device in accordance with claim 13, **characterised in that** the feeding trough (74, 76) is coupled to an automatic conveying device.

15. Device in accordance with claim 2, **characterised in that** the grill (66, 68) is essentially constructed flat and can via a hinged connection to the lifting gear (10 ... 24) be tilted between an essentially horizontal and an essentially vertical position.

16. Device in accordance with one or more of the foregoing claims 2 to 15, **characterised in that** floor grills (78, 80) are provided.

17. Device in accordance with claim 16, **characterised in that** the floor grills (78, 80) are constructed to hinge.

18. Device in accordance with claim 16 or 17, **characterised in that** a means (82, 84) for catching droppings is disposed under the floor grill (78, 80).

19. Device in accordance with claim 18, **characterised in that** the means for catching droppings is a catching container (92, 94, 96, 98).

20. Device in accordance with claim 20, **characterised in that** the means for catching droppings is a conveyor belt.

21. Device in accordance with one or more of the foregoing claims 2 to 20, **characterised in that** the device can be extended modularly by means of other rearing equipment in accordance with one or more of the foregoing claims.

## Revendications

1. Procédé d'élevage de la volaille avec des moyens élévateurs (20 - 24) disposés à l'intérieur d'un poulailler ou d'un autre bâtiment adéquat et qui portent des éléments suspendus en forme de dispositifs d'alimentation et/ou de points d'abreuvement et/ou de perchoirs et/ou des grilles, ces moyens élévateurs (10 - 24) augmentant par étapes ou continuellement l'écart entre les éléments suspendus et la surface support au fur et à mesure que les animaux grandissent.

2. Dispositif permettant l'exécution du procédé, selon la revendication 1, d'élevage de la volaille, avec des montant verticaux (2, 3) retenant un portique et au moins une poutrelle transversale (8) s'étendant essentiellement à l'horizontale et reliée avec au moins l'un des montants (2, 3), **caractérisé en ce que** la poutrelle transversale (8) présente des moyens élévateurs (10, 24) auxquels sont reliés, de façon réglable en hauteur, des dispositifs d'alimentation (74, 76) et/ou des points d'abreuvement (70, 72) et/ou des perchoirs (42 - 56) et/ou des grilles (66 - 68) en tant qu'éléments suspendus.

3. Dispositif selon la revendication 2, **caractérisé en ce que** le portique formé par les montants (2, 4) et la poutrelle transversale (8) se présente sous la forme d'un portique autoporteur.

4. Dispositif selon la revendication 2 ou 3, **caractérisé en ce que** le volume sur lequel s'étend le portique est limité au moins en partie par une paroi (86), en particulier une paroi latérale.

5. Dispositif selon la revendication 4, **caractérisé en ce que** la paroi est essentiellement composée d'un treillis filaire.

6. Dispositif selon la revendication 2, **caractérisé en ce que** les moyens élévateurs (10 ... 24) se présentent sous la forme de treuils.

7. Dispositif selon la revendication 6, **caractérisé en ce que** le treuil respectif comprend un fil (26 ... 40), une corde, un câble ou une chaîne.

8. Dispositif selon la revendication 6 ou 7, **caractérisé en ce que** les tubes de treuil (10 ... 24) reposent dans les poutrelles (8).

9. Dispositif selon l'une ou plusieurs des revendications précédentes 2 à 8, **caractérisé en ce que** les moyens élévateurs (10 ... 24) sont actionnables à la main.

10. Dispositif selon l'une ou plusieurs des revendications précédentes 2 à 8, **caractérisé en ce que** les moyens élévateurs (10 ... 24) sont équipés d'un moteur.

11. Dispositif selon la revendication 10, **caractérisé en ce que** le moteur est piloté par un système de commande, lequel est programmable.

12. Dispositif selon la revendication 2, **caractérisé en ce que** plusieurs éléments suspendus peuvent être agencés à une hauteur variable indépendamment les uns des autres.

13. Dispositif selon la revendication 2, **caractérisé en ce que** le dispositif d'alimentation (74, 76) est une rigole d'alimentation.

14. Dispositif selon la revendication 13, **caractérisé en ce que** la rigole d'alimentation (74, 76) est couplée à un dispositif de convoyage automatisé.

15. Dispositif selon la revendication 2, **caractérisé en ce que** la grille (66, 68) est configurée essentiellement plane et qu'elle peut basculer avec le moyen élévateur (10 ... 24) entre une orientation horizontale et une orientation essentiellement verticale via une jonction à charnières.

16. Dispositif selon l'une ou plusieurs des revendications précédentes 2 à 15, **caractérisé en ce que** des grilles de sol (78, 80) sont prévues.

17. Dispositif selon la revendication 16, **caractérisé en ce que** les grilles de sol (78, 80) sont disposées pour tourner sur des charnières.

18. Dispositif selon la revendication 16 ou 17, **caractérisé en ce que** sous les grilles de sol (78, 80) se trouve un moyen intercepteur (82, 84) des déjections.

19. Dispositif selon la revendication 18, **caractérisé en ce que** le moyen intercepteur des déjections est un récipient intercepteur (92, 94, 96, 98).

20. Dispositif selon la revendication 18, **caractérisé en ce que** le dispositif intercepteur des déjections est un tapis convoyeur.

21. Dispositif selon l'une ou plusieurs des revendications précédentes 2 à 20, **caractérisé en ce que** le dispositif est extensible de façon modulaire au moyen d'autres équipements d'élevage conformément à l'une ou plusieurs des revendications précédentes.
